# EUROPÄISCHE PATENTSCHRIFT

(11) **EP 3 085 224 B1**
(45) Veröffentlichungstag und Bekanntmachung des Hinweises auf die Patenterteilung: **07.03.2018**
(21) Anmeldenummer: 16166302.6
(22) Anmeldetag: 21.04.2016
(51) Int. Cl.: A01G 23/087

(54) **VORRICHTUNG ZUM SCHNEIDEN VON SCHWEREM SCHNITTGUT**
DEVICE FOR CUTTING HEAVY LUMBER
DISPOSITIF DE COUPE DE TRONCS LOURDS

(30) Priorität: 23.04.2015 AT 503252015
(43) Veröffentlichungstag der Anmeldung: 26.10.2016
(73) Patentinhaber: Steininger, Werner, 4722 Peuerbach (AT)
(72) Erfinder: Steininger, Werner, 4722 Peuerbach (AT)
(74) Vertreter: KLIMENT & HENHAPEL

(56) Entgegenhaltungen:
- US-A- 3 183 954
- US-A- 5 044 409
- US-A1- 2011 232 804

## Beschreibung

Die Erfindung betrifft eine Vorrichtung zum Schneiden von schwerem Schnittgut, insbesondere Bäumen, umfassend einen Basisteil und eine relativ zum Basisteil von einer Öffnungslage in eine Schließlage schwenkbar angeordnete Schwinge, die sichelförmig ausgeführt ist und eine Schneidplatte trägt, wobei die Schwinge in ihrer Öffnungslage von einem Widerlager des Basisteils beabstandet ist, und in ihrer Schließlage mit dem Widerlager des Basisteils einen Aufnahmeraum für abgetrenntes Schnittgut umgrenzt, der von der Schneidplatte gequert wird, wobei das Widerlager sichelförmig vom Basisteil auskragt und eine den Aufnahmeraum querende Gegenschneidplatte aufweist, gemäß dem Oberbegriff von Anspruch 1.

Eine solche Vorrichtung ist aus der US 5044409 A bekannt. Weitere Schneidvorrichtungen wurden in der US 2011/0232804 A1 und der US 5,044,409 B beschrieben. In der Holzindustrie und der Forstwirtschaft werden etwa zum Schneiden von Bäumen große Arbeitsmaschinen eingesetzt, die mit einem Auslegerarm mit Greifvorrichtungen versehen sind, mit deren Hilfe sie Baumstämme umfassen können. Diese Greifvorrichtungen können beispielsweise mit einer Hydraulik versehen sein. Zusätzlich ist am Auslegerarm ein Schneidwerk vorgesehen, das in Form einer relativ zu einem Widerlager beweglichen Schwinge mit einer daran befestigten Schneidplatte ausgeführt sein kann und es ermöglicht, die erfassten Baumstämme zu durchtrennen. In weiterer Folge kann der Auslegerarm den Baum entweder zur Seite legen oder einer Maschine zur Zerkleinerung oder Weiterverarbeitung zuführen.

Herkömmliche Vorrichtungen weisen hierzu ein Widerlager für die sichelförmige Schwinge auf, das mit zumindest einer Widerlagerkante versehen ist, die zumeist zur Verbesserung des Reibschlusses zu dem zu durchtrennenden Baum gezahnt oder geriffelt ausgeführt ist. In Öffnungslage der Schwinge wird ein zu durchtrennender Baumstamm von der gattungsgemäßen Vorrichtung umfasst, und im Zuge des Übergangs in die Schließlage wird der Baumstamm von der Schneidplatte der Schwinge an die Widerlagerkante des Widerlagers gepresst, bis die Schneidplatte in weiterer Folge in den Baumstamm eindringt und ihn durchtrennt. In der Schließlage der Schwinge bilden die Schwinge und das Widerlager schließlich einen Aufnahmeraum, der den abgetrennten Baumstamm aufnimmt.

Der lichte Querschnitt des Aufnahmeraums in Schließlage der Schwinge begrenzt die Dicke der Baumstämme, die mit der gattungsgemäßen Vorrichtung durchtrennt werden können und wird im Wesentlichen durch den Radius der inneren, konkav verlaufenden Seitenfläche der sichelförmigen Schwinge festgelegt, da die Widerlagerkante einen Anschlag für den Baumstamm bildet. Es wäre zwar möglich, zum Durchtrennen dickerer Baumstämme die Schwinge und das Widerlager entsprechend größer auszuführen, wodurch aber das Gewicht des Schneidwerk und der Kraftaufwand für dessen Manipulation erhöht wird.

Es besteht somit das Ziel der Erfindung darin bei im Wesentlichen unveränderten Abmessungen von Schwinge und Widerlager des Schneidwerks größere Baumstämme schneiden zu können.

Dieses Ziel wird durch die Merkmale von Anspruch 1 erreicht. Anspruch 1 bezieht sich auf eine Vorrichtung zum Schneiden von schwerem Schnittgut, insbesondere Bäumen, umfassend einen Basisteil und eine relativ zum Basisteil von einer Öffnungslage in eine Schließlage schwenkbar angeordnete Schwinge, die sichelförmig ausgeführt ist und eine Schneidplatte trägt, wobei die Schwinge in ihrer Öffnungslage von einem Widerlager des Basisteils beabstandet ist, und in ihrer Schließlage mit dem Widerlager des Basisteils einen Aufnahmeraum für abgetrenntes Schnittgut umgrenzt, der von der Schneidplatte gequert wird, wobei das Widerlager sichelförmig vom Basisteil auskragt und eine den Aufnahmeraum querende Gegenschneidplatte aufweist. Erfindungsgemäß wird hierbei vorgeschlagen, dass an der konkav verlaufenden Seitenfläche des sichelförmigen Widerlagers ein Widerlagerelement angeordnet ist, das eine den Aufnahmeraum querende Widerlagerplatte umfasst, die eine den Aufnahmeraum querende und gezahnt ausgeführte Widerlagerkante aufweist, die parallel zur Schneide der Gegenschneidplatte verläuft, wobei sich die Gegenschneidplatte des Widerlagers und die Schneidplatte der Schwinge in ihrer Schließlage überlappen.

Die Gegenschneidplatte bewirkt, dass der Baumstamm nun auch auf der Seite des Widerlagers geschnitten wird, anstatt bloß einen Anschlag in Form der Widerlagerkante vorzusehen. Der Baumstamm kann sich somit auch auf der Seite des Widerlagers auf die Gegenschneidplatte schieben. Da das Widerlager sichelförmig vom Basisteil auskragt wird der Aufnahmeraum des Schneidwerks vergrößert, sodass nun auch größere Baumstämme geschnitten werden können ohne die Schwinge vergrößern zu müssen.

Die zueinander bewegten Schneiden sind in der Praxis jedoch nicht unproblematisch. Die Gegenschneidplatte könnte etwa so ausgeführt werden, dass in Schließlage der Schwinge die Schneiden der Schneidplatte und der Gegenschneidplatte aneinanderstoßen, wodurch ein sauberer Schnitt gewährleitet wäre. Allerdings erweist sich eine solche Ausführung beim Schneiden von schwerem Schnittgut als problematisch, da sich die Schneidplatte und die Gegenschneidplatte aufgrund der starken Belastungen im Zuge des Schnittvorganges leicht verbiegen können und der Schluss der aneinander liegenden Schneiden nur unvollständig ist. Neben einem unsauberen Schnittbild kann es sogar zu einem unvollständigen Durchtrennen des Baumstammes kommen. Zudem stumpfen Schneiden im Zuge der Benutzung zunehmend ab, sodass sie nachgeschärft werden müssen. Das in der Regel spanabhebende Schleifen verkürzt aber die Schneidplatte und die Gegenschneidplatte geringfügig, sodass ebenfalls der Schluss der aneinander liegenden Schneiden beeinträchtigt wird. Daher ist erfindungsgemäß ferner vorgesehen, dass sich die Gegenschneidplatte des Widerlagers und die Schneidplatte der Schwinge in ihrer Schließlage überlappen. Auf diese Weise beeinträchtigt ein Verbiegen von Schneidplatte und Gegenschneidplatte nicht mehr den Schnittvorgang, und auch ein Nachschärfen kann nun ohne Beeinträchtigung des Schnittbildes erfolgen.

Um den Baumstamm im Zuge des Schnittvorganges zu fixieren ist am Widerlager erfindungsgemäß ein Widerlagerelement angeordnet, das eine den Aufnahmeraum querende und gezahnt ausgeführte Widerlagerkante aufweist, die parallel zur Schneide der Gegenschneidplatte verläuft. Der Baumstamm wird auf diese Weise an einem seitlichen Ausweichen während des Schnittvorganges gehindert, indem sich die gezahnte oder geriffelte Widerlagerkante im Baumstamm festkrallt.

Diese Widerlagerkante könnte oberhalb oder unterhalb der Gegenschneidplatte angeordnet werden. Erfindungsgemäß wird jedoch vorgeschlagen, dass das Widerlagerelement an der konkav verlaufenden Seitenfläche des sichelförmigen Widerlagers angeordnet ist und eine den Aufnahmeraum querende Widerlagerplatte umfasst, die die gezahnt ausgeführte Widerlagerkante aufweist. Die Gegenschneidplatte kann an einer Außenfläche des Basisteils angeordnet werden, wobei ihre Schneide die Widerlagerkante in Richtung der Schneidplatte geringfügig überragt. Somit dringt im Zuge des Schnittvorganges die Schneide der Gegenschneidplatte in den Baumstamm ein und wird in weiterer Folge auf die Widerlagerplatte geschoben.

Vorzugsweise kann dabei das Widerlagerelement austauschbar am Widerlager befestigt sein um es leicht warten oder ersetzen zu können. Eine solche Austauschbarkeit ist bei herkömmlichen Ausführungen nicht gegeben, da das Widerlager mit seiner Widerlagerkante in der Regel am Basisteil angeformt ist und daher das gesamte Basisteil ausgetauscht werden müsste.

Die Erfindung wird in weiterer Folge anhand von Ausführungsbeispielen mithilfe der beiliegenden Zeichnungen näher erläutert. Hierbei zeigen die
Fig. 1 eine axonometrische Ansicht eines Schneidwerks gemäß dem Stand der Technik in Öffnungslage der Schwinge,
Fig. 2 eine Draufsicht auf das Schneidwerk gemäß dem Stand der Technik nach Fig. 1 in Schließlage der Schwinge,
Fig. 3 eine axonometrische Ansicht eines Schneidwerks ohne Widerlagerkante in Öffnungslage der Schwinge,
Fig. 4 eine Draufsicht des Schneidwerks gemäß Fig. 3 in Schließlage der Schwinge,
Fig. 5 eine axonometrische Ansicht eines erfindungsgemäßen Schneidwerks mit zusätzlicher Widerlagerkante in Öffnungslage der Schwinge, und die
Fig. 6 eine Explosionsdarstellung des erfindungsgemäßen Schneidwerks gemäß Fig. 5.

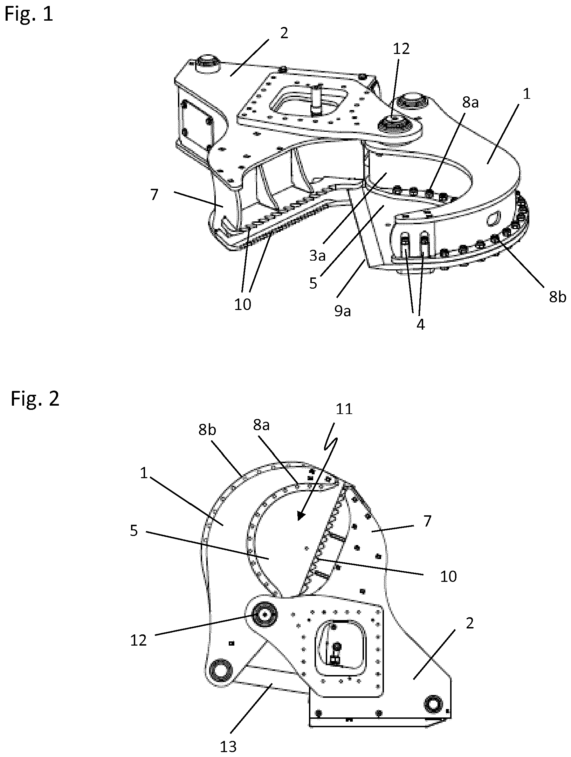

Die Figuren 1 und 2 zeigen ein Schneidwerk gemäß dem Stand der Technik mit einer sichelförmigen Schwinge 1, die an einem Basisteil 2 schwenkbar angeordnet ist. Das Basisteil 2 ist etwa am Auslegerarm einer Arbeitsmaschine angekoppelt und mit einer Bedienkanzel der Arbeitsmaschine über eine entsprechende Hydraulik verbunden um die Schwinge 1 und das Basisteil 2 steuern zu können. Die Schwinge 1 ist dabei über ein Schwenklager 12 am Basisteil 2 schwenkbar befestigt und kann mithilfe einer hydraulischen Stelleinrichtung 13 (siehe Fig. 2) um das Schwenklager 12 verschwenkt werden. Bei einer verkürzten Stellung der Stelleinrichtung 13 befindet sich die Schwinge 1 in ihrer Öffnungslage zum Aufnehmen eines Baumstammes, und bei verlängerter Stellung der Stelleinrichtung 13 befindet sich die Schwinge 1 in ihrer Schließlage zum Durchtrennen des aufgenommenen Baumstammes.

Die Schwinge 1 umgrenzt mit ihrer konkav verlaufenden Seitenfläche 3a einen Aufnahmeraum 11. Dieser Aufnahmeraum 11 wird von einer Schneidplatte 5 gequert und dient zur Aufnahme von abgetrenntem Schnittgut, beispielsweise eines Baumstammes. Die Schneidplatte 5 weist eine geradlinig ausgebildete Schneide 9a auf, die den Aufnahmeraum 11 für abgetrenntes Schnittgut quert. Die Befestigung der Schneidplatte 5 erfolgt an einer Außenfläche der Schwinge 1 über eine erste Schraubenreihe 8a, die einer inneren Randkante der konkav geformten Seitenfläche 3a folgt, sowie mittels einer zweiten Schraubenreihe 8b, die einer konvex geformten Außenkontur der Schwinge 1 folgt. Die Schneidplatte 5 ist dabei an der Außenfläche der Schwinge 1 anliegend befestigt und schließt vorzugsweise bündig mit der konvexen Außenkontur der Schwinge 1 ab. Im Endbereich der sichelförmigen Schwinge 1 sind ferner zwei Gewindehülsen 4 für zwei der Schrauben der zweiten Schraubenreihe 8b am Basisteil 2 angeformt.

Am Basisteil 2 ist das Widerlager 7 der Schneidplatte 5 angeordnet. Das Widerlager 7 verfügt im gezeigten Ausführungsbeispiel über zwei vorragende Widerlagerkanten 10, die gezahnt oder geriffelt ausgeführt sind, um einen besseren Halt des zu durchtrennenden Baumstammes zu gewährleisten. Das Widerlager 7 ist dabei am Basisteil 2 angeformt.

Bei Betätigung der Stelleinrichtung 13 wird die Schwinge 1 um das Schwenklager 12 verschwenkt und die Schneidplatte 5 bewegt sich auf die Widerlagerkanten 10 des Widerlagers 7 zu. Ein zwischen der Schwinge 1 und dem Widerlager 7 befindlicher Baumstamm wird dabei mithilfe der Schneidplatte 5 zunehmend durchtrennt, wobei der Baumstamm an den Widerlagerkanten 10 abgestützt wird. Sobald die Schneide 9a der Schneidplatte 5 zwischen die Widerlagerkanten 10 tritt, ist der Baumstamm zur Gänze durchtrennt und wird vom Aufnahmeraum 11 zwischen der Schwinge 1 in ihrer Schließlage und dem Widerlager 7 aufgenommen, wobei er auf der Schneidplatte 5 ruht.

Wie insbesondere in der Fig. 2 ersichtlich ist, begrenzt der lichte Querschnitt des Aufnahmeraums 11 in Schließlage der Schwinge 1 die Dicke der Baumstämme, die mit dem gezeigten Schneidwerk durchtrennt werden können. Dieser lichte Querschnitt wird dabei im Wesentlichen durch den Radius der inneren, konkav verlaufenden Seitenfläche 3a der sichelförmigen Schwinge 1 festgelegt, da die Widerlagerkanten 10 einen Anschlag für den Baumstamm bilden.

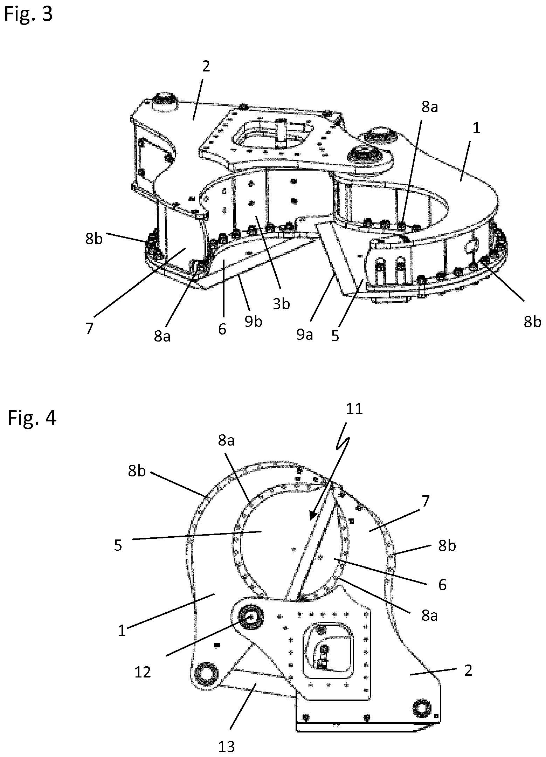

Daher wird erfindungsgemäß eine Ausführungsform gemäß der Fig. 3-6 vorgeschlagen. Hierbei ist das Widerlager 7 wie insbesondere in der Fig. 4 ersichtlich ist so ausgeführt, dass es sichelförmig vom Basisteil 2 auskragt und eine den Aufnahmeraum 11 querende Gegenschneidplatte 6 mit einer in Richtung der Schneidplatte 5 orientierten Schneide 9b aufweist. Die Gegenschneidplatte 6 ist vergleichbar zur Schneidplatte 5 an einer Außenfläche des Widerlagers 7 des Basisteils 2 über eine erste Schraubenreihe 8a, die einer inneren Randkante der konkav geformten Seitenfläche 3b des sichelförmigen Widerlagers 7 folgt, sowie mittels einer zweiten Schraubenreihe 8b, die einer konvex geformten Außenkontur des Widerlagers 7 folgt, befestigt. Die Gegenschneidplatte 6 ist dabei an der Außenfläche des Widerlagers 7 anliegend befestigt und schließt vorzugsweise bündig mit der konvexen Außenkontur des Widerlagers 7 ab.

Bei Betätigung der Stelleinrichtung 13 (siehe Fig. 4) wird die Schwinge 1 wiederum um das Schwenklager 12 verschwenkt und die Schneidplatte 5 bewegt sich auf die Gegenschneidplatte 6 des Widerlagers 7 zu. Ein zwischen der Schwinge 1 und dem Widerlager 7 befindlicher Baumstamm wird dabei mithilfe der Schneidplatte 5 zunehmend durchtrennt, wobei der Baumstamm aber nun auch auf der Seite des Widerlagers 7 mithilfe der Gegenschneidplatte 6 geschnitten wird. Der Baumstamm kann sich somit auch auf der Seite des Widerlagers 7 auf die Gegenschneidplatte 6 schieben. Da erfindungsgemäß das Widerlager 7 sichelförmig vom Basisteil 2 auskragt wird der Aufnahmeraum 11 des Schneidwerks vergrößert, sodass nun auch größere Baumstämme geschnitten werden können ohne die Schwinge 1 vergrößern zu müssen.

Die Gegenschneidplatte 6 des Widerlagers 7 und die Schneidplatte 5 der Schwinge 1 sind dabei so ausgeführt, dass sie sich in der Schließlage der Schwinge 1 überlappen. Der überlappende Bereich wird dabei auch als Überstand bezeichnet und bewirkt insbesondere, dass ein leichtes Verbiegen von Schneidplatte 5 und Gegenschneidplatte 6 den Schnittvorgang nicht mehr beeinträchtigt und auch ein Nachschärfen der Schneiden 9 ohne Beeinträchtigung des Schnittbildes problemlos erfolgen kann.

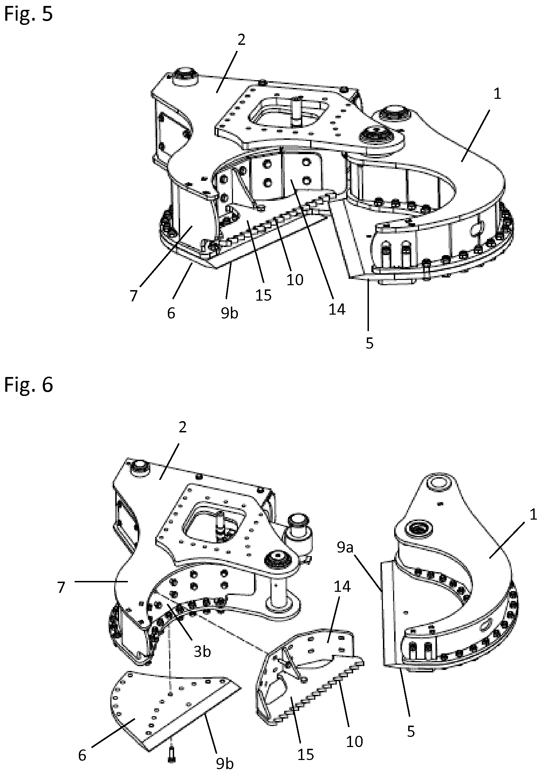

Die Figuren 5 und 6 zeigen die erfindungsgemäße Ausführungsvariante, bei der am Widerlager 7 ein Widerlagerelement 14 angeordnet ist, das eine den Aufnahmeraum 11 querende und gezahnt ausgeführte Widerlagerkante 10 aufweist, die parallel zur Schneide 9b der Gegenschneidplatte 6 verläuft. Der Baumstamm wird auf diese Weise an einem seitlichen Ausweichen während des Schnittvorganges gehindert, indem sich die gezahnte oder geriffelte Widerlagerkante 10 im Baumstamm festkrallt. Das Widerlagerelement 14 ist an der konkav verlaufenden Seitenfläche 3b des sichelförmigen Widerlagers 7 angeordnet und umfasst eine den Aufnahmeraum 11 querende Widerlagerplatte 15, die die gezahnt ausgeführte Widerlagerkante 10 aufweist (siehe insbesondere Fig. 6). Die Widerlagerkante 10 wird dabei von der Schneide 9b der Gegenschneidplatte 6 geringfügig überragt. Somit dringt im Zuge des Schnittvorganges die Schneide 9b der Gegenschneidplatte 6 in den Baumstamm ein und wird in weiterer Folge auf die Widerlagerplatte 15 geschoben.

Vorzugsweise kann dabei das Widerlagerelement 14 austauschbar am Widerlager 7 befestigt sein um es leicht warten oder ersetzen zu können. Eine solche Austauschbarkeit ist bei herkömmlichen Ausführungen nicht gegeben, da das Widerlager 7 wie in der Fig. 1 ersichtlich mit seiner Widerlagerkante 10 in der Regel am Basisteil 2 angeformt ist und daher das gesamte Basisteil 2 ausgetauscht werden müsste.

Mithilfe der erfindungsgemäß vorgesehenen Maßnahmen wird der Aufnahmeraum 11 des Schneidwerks vergrößert, sodass nun auch größere Baumstämme geschnitten werden können ohne die Schwinge 1 vergrößern zu müssen.

### BEZUGSZEICHENLISTE

- 1: Schwinge
- 2: Basisteil
- 3a: konkave Seitenfläche der Schwinge 1
- 3b: konkave Seitenfläche des Widerlagers 7
- 4: Gewindehülse
- 5: Schneidplatte
- 6: Gegenschneidplatte
- 7: Widerlager
- 8a: erste Schraubenreihe
- 8b: zweite Schraubenreihe
- 9a: Schneide der Schneidplatte 5
- 9b: Schneide der Gegenschneidplatte 6
- 10: Widerlagerkante
- 11: Aufnahmeraum
- 12: Schwenklager
- 13: Stelleinrichtung
- 14: Widerlagerelement
- 15: Widerlagerplatte

## Patentansprüche

1. Vorrichtung zum Schneiden von schwerem Schnittgut, insbesondere Bäumen, umfassend einen Basisteil (2) und eine relativ zum Basisteil (2) von einer Öffnungslage in eine Schließlage schwenkbar angeordnete Schwinge (1), die sichelförmig ausgeführt ist und eine Schneidplatte (5) trägt, wobei die Schwinge (1) in ihrer Öffnungslage von einem Widerlager (7) des Basisteils (2) beabstandet ist, und in ihrer Schließlage mit dem Widerlager (7) des Basisteils (2) einen Aufnahmeraum (11) für abgetrenntes Schnittgut umgrenzt, der von der Schneidplatte (5) gequert wird, wobei das Widerlager (7) sichelförmig vom Basisteil (2) auskragt und eine den Aufnahmeraum (11) querende Gegenschneidplatte (6) aufweist, **dadurch gekennzeichnet, dass** an der konkav verlaufenden Seitenfläche (3b) des sichelförmigen Widerlagers (7) ein Widerlagerelement (14) angeordnet ist, das eine den Aufnahmeraum (11) querende Widerlagerplatte (15) umfasst, die eine den Aufnahmeraum (11) querende und gezahnt ausgeführte Widerlagerkante (10) aufweist, die parallel zur Schneide der Gegenschneidplatte (6) verläuft, wobei sich die Gegenschneidplatte (6) des Widerlagers (7) und die Schneidplatte (5) der Schwinge (1) in ihrer Schließlage überlappen.

2. Vorrichtung nach Anspruch 1, **dadurch gekennzeichnet, dass** das Widerlagerelement (14) austauschbar am Widerlager (7) befestigt ist.

3. Arbeitsmaschine mit einem Auslegerarm und einer am Auslegerarm befestigten Vorrichtung nach einem der Ansprüche 1 bis 2.

## Claims

1. An apparatus for cutting heavy cut materials, in particular trees, comprising a base part (2) and a rocker (1) which is pivotable relative to the base part (2) from an open position into a closed position and which is formed in a crescent-shaped manner and carries a cutting plate (5), wherein the rocker (1) is spaced in its open position from an abutment (7) of the base part (2), and delimits a receiving space (11) for severed cut material in its closed position with the abutment (7) of the base part (2), which receiving space (11) is traversed by the cutting plate (5), wherein the abutment (7) projects crescent-shaped from the base part (2) and has a counter-cutting plate (6) crossing the receiving space (11), **characterized in that** an abutment element (14) is arranged on the concave extending side face (3b) of the crescent-shaped abutment (7), which comprises an abutment plate (15) traversing the receiving space (11), which abutment plate (15) comprises an abutment edge (10) which is formed in a toothed manner and traverses the receiving space (11) and which extends parallel to the cutting edge of the counter-cutting plate (6), wherein the counter-cutting plate (6) of the abutment (7) and the cutting plate (5) of the rocker (1) overlap in their closed position.

2. An apparatus according to claim 1, **characterized in that** the abutment element (14) is exchangeably fixed to the abutment (7).

3. A work machine with a cantilever arm and an apparatus according to one of claims 1 to 2 which is attached to the cantilever arm.

## Revendications

1. Dispositif pour couper des matériaux à couper lourds, en particulier des arbres, comprenant une partie de base (2) et une bascule (1) disposée de façon à pouvoir pivoter par rapport à la partie de base (2) d'une position d'ouverture à une position de fermeture, qui est réalisée en forme de faucille et qui porte une plaque de coupe (5), la bascule (1) étant distante, dans sa position d'ouverture, d'un contre-appui (7) de la partie de base (2) et délimitant dans sa position de fermeture avec le contre-appui (7) de la partie de base (2) un logement (11) pour du matériau à couper découpé qui est traversé par la plaque de coupe (5), le contre-appui (7) s'évasant en forme de faucille à partir de la partie de base (2) et présentant une plaque de coupe opposée (6) qui traverse le logement (11), **caractérisé en ce qu'**est disposé sur la face latérale concave (3b) du contre-appui (7) en forme de faucille un élément de contre-appui (14) qui comprend une plaque de contre-appui (15) traversant le logement (11) et comprenant une arête de contre-appui (10) dentée qui traverse le logement (11) et qui est passe parallèlement au tranchant de la plaque de coupe opposée (6), la plaque de coupe opposée (6) du contre-appui (7) et la plaque de coupe (5) de la bascule (1) se chevauchant dans leur position de fermeture.

2. Dispositif selon la revendication 1, **caractérisé en ce que** l'élément de contre-appui (14) est fixé de façon interchangeable sur le contre-appui (7).

3. Machine de travail avec un bras de flèche et un dispositif selon l'une des revendications 1 à 2 fixé au bras de flèche.
